# FASCICULE DE BREVET EUROPEEN

(11) **EP 2 479 073 B1**
(45) Date de publication et mention de la délivrance du brevet: **15.01.2014**
(21) Numéro de dépôt: 11151740.5
(22) Date de dépôt: 21.01.2011
(51) Int. Cl.: B60R 25/02

(54) **Antivol de direction pour véhicule automobile**
Diebstahlsicherung für Lenksäule eines Kraftfahrzeugs
Steering-wheel antitheft device for an automobile

(43) Date de publication de la demande: 25.07.2012
(73) Titulaire: VALEO Sicherheitssysteme GmbH, 85253 Erdweg (DE)
(72) Inventeur: Laval, Anthony, D 80469, MUNICH (DE); Kaliebe, Lukas, D 85764, Oberschleißheim (DE)
(74) Mandataire: Larger, Solène

(56) Documents cités:
- EP-A2- 1 698 530
- EP-B1- 1 558 475
- DE-A1- 10 061 960
- FR-A1- 2 793 749
- FR-A1- 2 836 435
- US-B2- 7 140 213

## Description

L'invention concerne les antivols de colonne de direction de type motorisés électriquement.

On connaît de multiples constructions d'antivols de colonne de direction. Ainsi, on a proposé des antivols de colonne de direction comprenant un moteur et une roue dentée laquelle entraîne un pêne de verrouillage par une came ou une pente associée à la roue dentée, dans lesquels la roue dentée est rotative autour d'un axe qui est parallèle à un axe de sortie du moteur électrique, ou encore dans lesquels la roue dentée est rotative autour d'un axe qui est perpendiculaire à l'axe de sortie du moteur électrique.

Le pêne circule alors en coulissement en rapprochement de la colonne de direction, sous l'action d'un profil aménagé sur la roue dentée, jusqu'à une position de verrouillage de la colonne de direction.

De façon classique, le pêne est destiné à immobiliser l'arbre de la colonne par emboîtement dans une rainure longitudinale ménagée sur le contour de cet arbre. A cet effet, l'arbre comporte plusieurs rainures reparties angulairement sur son contour. Les parties du contour de l'arbre séparant deux rainures successives sont appelées dents. Lorsque le pêne est en position saillante de coopération avec le contour de l'arbre de colonne, il est soit emboîté dans une rainure d'immobilisation de cet arbre, soit en contact avec une dent. Dans ce dernier cas, l'arbre de colonne n'est pas immobilisé en rotation. Toutefois, comme cela est classique, si le volant relié à l'arbre est manoeuvré, cet arbre est automatiquement immobilisé après une brève course angulaire de celui-ci ayant pour effet de placer une rainure au droit du pêne de façon à autoriser l'emboîtement de ce dernier dans cette rainure.

Le document EP 1 558 475 B décrit un antivol selon le préambule de la revendication 1.

Dans le cas d'un antivol de direction motorisé, il est indispensable de définir des positions dites de déverrouillage et de verrouillage, pour couper le moteur lorsqu'elles sont atteintes. A cet effet il est prévu un dispositif d'indexage et un indexeur lié au pêne, c'est-à-dire que le moteur ne sera coupé que lorsque le pêne aura atteint la position dite de déverrouillage ou la position dite de verrouillage. Pour ce qui est de la position dite de verrouillage, du fait que le pêne peut se retrouver soit sur un dent soit dans une rainure, deux choix peuvent être opéré. Le premier choix consiste à définir la position dite de verrouillage pour un pêne se retrouvant dans une rainure, cette position correspond à la position la plus basse du pêne. Si, dans cette configuration d'indexation de la position de verrouillage, le pêne se retrouve non pas dans une rainure mais sur une dent, le pêne n'a pas pu atteindre sa position basse et donc la position de verrouillage n' a pas pu être détectée. Le moteur continue donc à tourner. Pour éviter ce phénomène, il est donc préféré de définir la position dite de verrouillage pour un pêne se retrouvant sur une dent. Dans cette configuration d'indexation de la position de verrouillage, le moteur est arrêté pour une position de pêne n'ayant pas atteint le niveau bas c'est-à-dire dans une rainure. Pour compenser cet écart il est prévu de maintenir le moteur en fonctionnement pendant un certain temps. Malheureusement, avec cette rotation supplémentaire, la roue dentée risque d'atteindre sa position de butée et d'entraîner une répétition d'effort mécanique sur cette butée.

Le but de l'invention est de pallier à ces inconvénients tout en préservant une configuration compacte d'antivol de direction pouvant être logé dans un espace restreint en partie basse de la colonne de direction.

Ce but est atteint selon l'invention grâce à un Antivol motorisé de colonne de direction de véhicule automobile selon la revendication 1.

Un antivol selon l'invention peut également présenter une ou plusieurs des caractéristiques ci-dessous, considérées individuellement ou selon toutes les combinaisons techniquement possibles :
- l'indexeur comprend un aimant et le dit au moins un capteur est un capteur à effet hall.
- le capteur est un commutateur mécanique et en ce que l'indexeur est muni d'un élément de surface apte à coopérer avec le dit au moins un commutateur mécanique.
- le ressort de rappel du pêne est monté entre le pêne et un élément fixe de l'antivol de sorte que la compression du ressort ne dépend pas d'une position relative du pêne et de l'indexeur mobile.
- l'arbre de sortie du moteur, la direction de déplacement du pêne et la direction de déplacement de l'indexeur mobile sont parallèles.
- le pêne et l'indexeur mobile appuient sur le profil de la roue dentée depuis le même côté dudit profil et se déplacent dans le même sens à l'encontre du profil.

L'invention concerne également un module d'assistance à la rotation d'une colonne de direction comprenant un moteur d'assistance appliquant une force de pivotement à la colonne de direction, caractérisé en ce qu'il comprend un antivol selon l'une quelconque selon les caractéristiques précédentes.

L'invention concerne aussi un ensemble constitué d'une colonne de direction de véhicule automobile et d'un antivol selon l'une quelconque caractéristiques précédentes.

L'invention concerne enfin un ensemble combiné d'une colonne de direction de véhicule automobile et d'un module d'assistance à la rotation de la colonne de direction selon les caractéristiques précédentes, dans lequel la colonne de direction comprend une couronne périphérique dans laquelle s'engage le pêne en position de verrouillage et la couronne périphérique reçoit une force de pivotement de colonne de direction délivrée par le moteur d'assistance.

D'autres caractéristiques, buts et avantages de l'invention apparaîtront à la lecture de la description détaillée qui va suivre, faite en référence aux figures annexées sur lesquelles :
- la figure 1a est une vue d'un antivol selon un mode préféré de l'invention dans une configuration de déverrouillage de la colonne de direction du véhicule;
- la figure 1b est une vue d'un antivol selon un mode préféré de l'invention dans une configuration de verrouillage de la colonne de direction du véhicule ;
- la figure 1c est une vue d'un antivol selon un mode préféré de l'invention dans une configuration intermédiaire de verrouillage de la colonne de direction du véhicule ;
- la figure 2a est une vue de la colonne en position déverrouillée,
- la figure 2b est une vue de la colonne en position verrouillé,
- la figure 2c est une vue de la colonne en position RTL (ready to lock).
- La figure 3 est une vue représentant un ensemble combiné consituté d'une colonne de direction et d'un module d'assistance à la rotation de la colonne de direction selon un mode préféré de réalisation de l'invention.

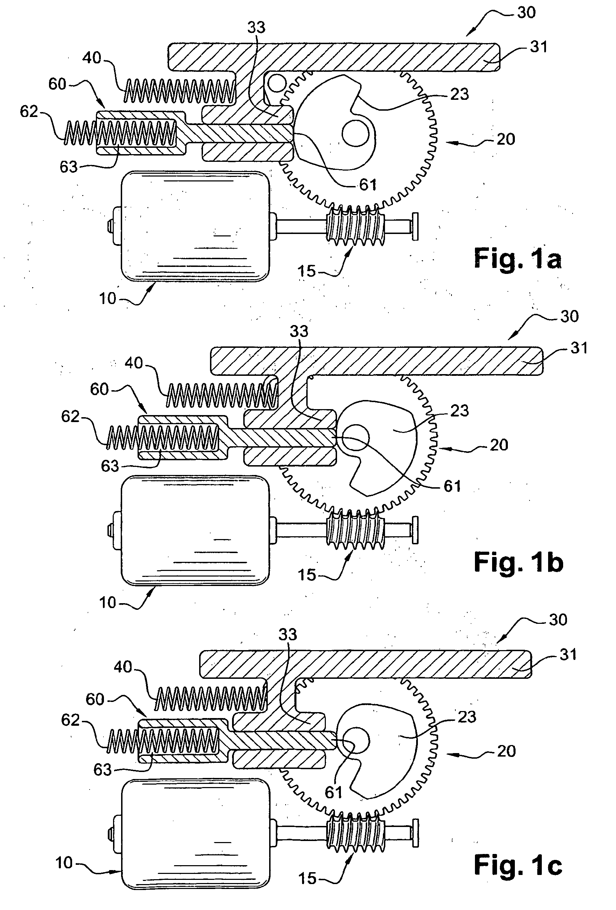

L'antivol représenté sur la figure 1a comprend un moteur électrique 10 muni d'un arbre de sortie formant une vis sans fin 15, une roue dentée 20 engrenée sur la vis sans fin 15, et un pêne 30 monté à coulissement, ces différents éléments étant disposés dans un boîtier non représenté.

La roue dentée 20 est montée à rotation autour d'un axe 21 lequel s'étend perpendiculairement à l'arbre de sortie du moteur 10 de sorte que l'arbre de sortie du moteur se trouve confondu dans le plan géométrique de la roue.

La roue 20 présente un première face 22, tournée vers une colonne de direction non représentée, laquelle est munie d'une came 23 en portion de disque laquelle coopère avec le pêne. A cet effet, le pêne 30 présente, outre un barreau principal 31, un appendice latéral 32 apte à venir s'interposer, au niveau de sa première extrémité 33, sur le trajet de la came 23 lorsque celle-ci pivote avec la roue dentée 20. L'appendice latéral 32 est poussé en appui sur la came 23 sous l'effet du ressort de rappel 40 qui rappelle le pêne 30 en position de verrouillage. Cette coopération de l'appendice latéral 32 du pêne 30 avec la came 23 a donc pour effet de rapprocher le barreau principal 31 d'une couronne 50 extérieure de la colonne de direction.

Dans un mode de réalisation alternatif non représenté, la came 23 est remplacée par une pente.

L'antivol comprend également une unité de pilotage avantageusement implémentée sous forme d'un circuit électronique placé dans le boîtier. Outre la mise en oeuvre du pilotage de du moteur électrique 10, l'unité de pilotage prend également en compte les informations fournies par un dispositif d'indexation.

Ce dispositif d'indexation permet d'informer l'unité de pilotage motorisée que la roue dentée a atteint une position permettant au barreau principal 31 du pêne d'assurer le verrouillage et le déverrouillage. En réponse à cette information, l'unité de pilotage commande l'arrêt du moteur.

Ce dispositif d'indexation comprend essentiellement un indexeur mobile 60 coopérant avec deux capteurs non représentés dont un sert à la détection de la position dite de déverrouillage et l'autre à la détection de la position dite de verrouillage.

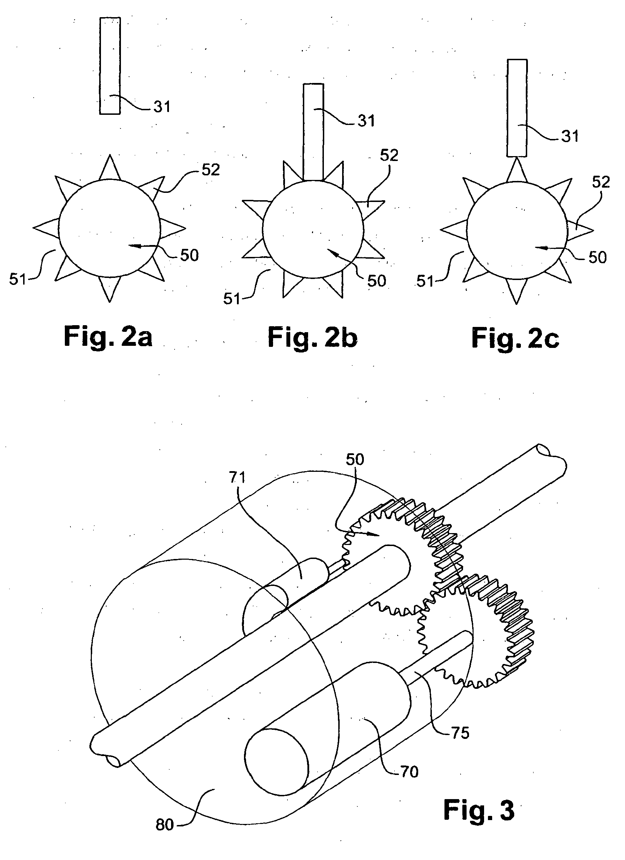

La position dite de déverrouillage est illustrée en figure 3a et correspond à une position où le barreau principal 31 du pêne 30 est éloigné de la couronne extérieure de la colonne de direction. Comme on peut le voir également sur les figures 3b et 3c, la couronne 50 de la colonne est constituée de rainures 51 entourées de part et d'autre par des dents 52. Le verrouillage de la colonne s'opère lorsque le barreau principal 31 du pêne 30 se trouve au fond d'une rainure 51, en appui dans un interstice de la couronne 50, bloquant ainsi la rotation de la couronne 50 et donc de la colonne. Dans certaines conditions, bien que la roue dentée soit arrivée à la position dite de verrouillage, le barreau principal 31 du pêne 30 peut se retrouver en appui sur une dent 52 de la couronne 50. Cette position est appelée la position RTL (ready to lock). En effet, dans cette position la rotation de la colonne est possible. Toutefois, comme cela est classique, si le volant relié à la colonne est manoeuvré, une brève course angulaire de celui-ci aura pour effet de placer une rainure 51 au droit du barreau principal 31 du pêne 30 de façon à autoriser l'emboîtement de ce dernier dans cette rainure 51. Cet emboîtement sera opéré à l'aide du ressort de rappel 40 du pêne.

L'indexeur mobile 60 est avantageusement constitué d'un barreau s'étendant longitudinalement parallèlement à l'axe de coulissement du pêne 30. Une première extrémité 61 de l'indexeur mobile 60 étant en appui sur la came 23 de la roue dentée 20. L'indexeur mobile 60 est maintenu, au niveau de sa première extrémité 61, en appui sur la came 23 par un ressort de rappel 62,avantageusement disposé sur la deuxième extrémité de l'indexeur mobile 60. C'est également sur cette deuxième extrémité qu'est disposé un aimant 63. Dans ce cas les deux capteurs d'indexation sont du type effet hall ou ampoule Reed. Dans un mode de réalisation alternatif, on dispose un bossage sur la deuxième extrémité de l'indexeur 60, et les deux capteurs magnétiques sont remplacés par des commutateurs mécaniques. Ainsi configuré, l'indexeur mobile 60 va sous l'action de la rotation de la roue denté 20 suivre le contour de la came 23 et se déplacer dans une direction parallèle à la direction de coulissement du pêne 30.

Dans un mode de réalisation avantageux, notamment pour des besoins de compacité, l'indexeur mobile 60 est disposé coulissant librement dans une gorge 34 aménagée sur l'appendice latéral 32 du pêne 30.

Partant d'une position déverrouillée illustrée figures 1a et 2a, et pour atteindre une position verrouillée illustrée figures 1b et 2b ou figures 1c et 2c, la roue dentée 20 va tourner dans le sens horaire. L'extrémité 33 de l'appendice latéral 32 du pêne 30 et l'extrémité 61 de l'indexeur mobile vont dans un premier temps suivre toutes les deux le contour de la came 23, et entraîner respectivement le pêne 30 et l'indexeur mobile 60 dans un coulissement parallèle suivant le même sens. Comme illustré sur les figure 1c et 2c, du fait que l'indexeur mobile 60 coulisse librement dans gorge 34 aménagée sur l'appendice latéral 32 du pêne 30, l'indexeur mobile 60 pourra atteindre la position dite de verrouillage alors que le barreau 31 est en position RTL (ready to lock), le moteur recevra alors une information d'arrêt par l'intermédiaire d'un des capteurs du dispositif d'indexation.

Dans un mode de réalisation avantageux, l'antivol de colonne de direction est un élément constitutif d'un module d'assistance motorisée à la rotation de la colonne de direction. Le fait d'intégrer l'antivol dans un module d'assistance motorisée au pivotement de la colonne de direction apporte un avantage en termes de sécurité puisque l'antivol se trouve alors dans une partie particulièrement basse de la colonne, à distance particulièrement grande du tableau de bord où un voleur agit par prédilection et dans une partie particulièrement inaccessible du véhicule.

Tel qu'illustré sur la figure 3, dans ce cas le module d'assistance motorisée comprend un moteur d'assistance 70 lequel est orienté de telle sorte que son arbre de sortie 75 s'étend parallèlement à la colonne de direction. L'arbre de sortie 75 du moteur 70 présente une denture périphérique laquelle engrène une couronne dentée 50 entourant la colonne de direction afin d'entraîner celle-ci en rotation. La couronne dentée 50 est avantageusement la couronne dans laquelle s'engage le pêne de sorte qu'une seule couronne dentée est utilisée pour les deux fonctions d'entraînement et de blocage, réduisant encore l'encombrement nécessaire à l'implémentation du module d'assistance décrit.

Avantageusement, l'antivol et le moteur d'assistance sont disposés de manière radialement opposée à la colonne de direction, de sorte que le pêne et l'arbre de sortie 75 du moteur d'assistance n'interfèrent pas. Le module d'assistance motorisée comprend avantageusement une même unité électronique de pilotage de l'assistance au pivotement et de commande du blocage de la colonne, laquelle assure qu'aucune commande d'assistance n'est appliquée au moteur d'assistance lorsque l'antivol est en position verrouillée.

Par le fait que l'antivol de colonne de direction, ici référencé 71, est une partie du module d'assistance motorisée à la rotation colonne de direction, l'unité de pilotage commune de l'assistance motorisée et du verrouillage de la colonne est avantageusement équipée d'une logique de commande mettant en oeuvre un léger mouvement de rotation de la colonne de direction lorsqu'elle commande simultanément un effort d'entraînement en déverrouillage du pêne. Ainsi, par ce léger mouvement, une éventuelle retenue en frottement est supprimée entre le pêne et la colonne de direction, par exemple entre le pêne et une bordure latérale d'une dent de la couronne dentée 50 et le pêne circule en coulissement de manière fiabilisée à chaque mise en tension du véhicule.

L'unité de pilotage est avantageusement implémentée sous forme d'un circuit électronique place dans un boîtier commun 80 du moteur d'assistance 70 et de l'antivol 71. Le circuit électronique est avantageusement positionné en dehors du boîtier propre à l'antivol. Outre la mise en oeuvre du pilotage de l'antivol par cette unité de pilotage prend notamment ici en compte le positionnement du pêne qui lui est indiqué par la réception de signaux de sortie des capteurs de positionnement de l'indexeur tels que décris ci-avant.

Bien entendu, on pourra apporter à l'invention de nombreuses modifications sans sortir du cadre de celle-ci.

## Revendications

1. Antivol motorisé de colonne de direction de véhicule automobile apte à adopter une configuration de verrouillage et une configuration de déverrouillage de la colonne de direction du véhicule, le dit antivol comprenant :
- un moteur électrique (10) muni d'un arbre de sortie formant une vis sans fin (15)
- une roue dentée (20) engrenée sur la vis sans fin (15),
- au moins un profil (23) disposé sur au moins une face de la roue dentée (20),
- un pêne (30) mobile entre une position de verrouillage et une position de déverrouillage de la colonne, ledit pêne comportant :
- un barreau principal (31) dont une extrémité coopère avec un élément de la colonne de direction en position de verrouillage,
- le pêne coopérant avec ledit profil (23) de la roue dentée de sorte que le profil (23) entraîne le pêne entre la position de verrouillage et la position de déverrouillage de la colonne,
- un ressort de rappel (40) pour rappeler le pêne (30) dans la position de verrouillage,
- un indexeur mobile (60) coopérant avec au moins un capteur afin de détecter une position du profil commandant une configuration de verrouillage de la colonne de l'antivol,**caractérisé en ce que** l'indexeur mobile (60) est monté à translation dans une coulisse (34) aménagée sur le pêne (30) et coopère avec le dit profil (23) de la roue dentée (20), ledit indexeur mobile (60) étant rappelé en coopération avec ledit profil (23) par un ressort de rappel (62), le ressort de rappel (62) de l'indexeur (60) et le ressort de rappel (40) du pêne (30) étant distincts.

2. Antivol selon la revendication 1 **caractérisé en ce que** l'indexeur (60) comprend un aimant (63) et **en ce que** le dit au moins un capteur est un capteur à effet hall.

3. Antivol selon la revendication 1 **caractérisé en ce que** ledit au moins un capteur est un commutateur mécanique et **en ce que** l'indexeur (60) est muni d'un élément de surface apte à coopérer avec le dit au moins un commutateur mécanique.

4. Antivol selon l'une des revendications précédentes **caractérisé en ce que** le ressort de rappel (40) du pêne (30) est monté entre le pêne (30) et un élément fixe de l'antivol de sorte que la compression du ressort (40) ne dépende pas d'une position relative du pêne (30) et de l'indexeur mobile (60).

5. Antivol selon l'une des revendications précédentes **caractérisé en ce que** l'arbre de sortie du moteur, la direction de déplacement du pêne et la direction de déplacement de l'indexeur mobile sont parallèles.

6. Antivol selon l'une des revendications précédentes **caractérisé en ce que** le pêne (30) et l'indexeur mobile (60) appuient sur le profil (23) de la roue dentée (20) depuis le même côté dudit profil (23) et se déplacent dans le même sens à l'encontre du profil (23).

7. Module d'assistance à la rotation d'une colonne de direction comprenant un moteur d'assistance (70) appliquant une force de pivotement à la colonne de direction, **caractérisé en ce qu'**il comprend un antivol selon l'une quelconque des revendications précédentes.

8. Ensemble constitué d'une colonne de direction de véhicule automobile et d'un antivol selon l'une quelconque des revendications 1 à 6

9. Ensemble combiné d'une colonne de direction de véhicule automobile et d'un module d'assistance (70, 80) à la rotation de la colonne de direction selon la revendication 7, dans lequel la colonne de direction comprend une couronne périphérique (50) dans laquelle s'engage le pêne en position de verrouillage et la couronne périphérique (50) reçoit une force de pivotement de colonne de direction délivrée par le moteur d'assistance (70).

## Patentansprüche

1. Motorisierte Diebstahlsicherung für Lenksäule eines Kraftfahrzeugs, die fähig ist, eine Verriegelungskonfiguration und eine Entriegelungskonfiguration der Lenksäule des Fahrzeugs einzunehmen, wobei die Diebstahlsicherung Folgendes aufweist:
- einen Elektromotor (10), der mit einer Ausgangswelle versehen ist, die eine Schnecke (15) bildet,
- ein Zahnrad (20), das auf der Schnecke (15) eingreift,
- mindestens ein Profil (23), das auf mindestens einer Seite des Zahnrads (20) angeordnet ist,
- einen Schlossriegel (30), der zwischen einer Verriegelungsposition und einer Entriegelungsposition der Lenksäule beweglich ist, wobei der Schlossriegel Folgendes aufweist:
- einen Hauptstab (31), von dem ein Ende mit einem Element der Lenksäule in Verriegelungsposition zusammenwirkt,
- wobei der Schlossriegel mit dem Profil (23) des Zahnrads derart zusammenwirkt, dass das Profil (23) den Schlossriegel zwischen der Verriegelungsposition und der Entriegelungsposition der Lenksäule antreibt,
- eine Rückholfeder (40), um den Schlossriegel (30) in die Verriegelungsposition zurückzuholen,
- einen beweglichen Positionierer (60), der mit mindestens einem Sensor zusammenwirkt, um eine Position des Profils zu erfassen, die eine Verriegelungskonfiguration der Lenksäule der Diebstahlsicherung steuert, **dadurch gekennzeichnet, dass** der bewegliche Positionierer (60) in Verschiebung in einer Gleitführung (34) montiert ist, die auf dem Schlossriegel (30) eingerichtet ist und mit dem Profil (23) des Zahnrads (20) zusammenwirkt, wobei der bewegliche Positionierer (60) in Zusammenwirken mit dem Profil (23) durch eine Rückholfeder (62) zurückgeholt wird, wobei die Rückholfeder (62) des Positionierers (60) und die Rückholfeder (40) des Schlossriegels (30) getrennt sind.

2. Diebstahlsicherung nach Anspruch 1, **dadurch gekennzeichnet, dass** der Positionierer (60) einen Magnet (63) aufweist, und dass der mindestens eine Sensor ein Hall-Effekt-Sensor ist.

3. Diebstahlsicherung nach Anspruch 1, **dadurch gekennzeichnet, dass** der mindestens eine Sensor ein mechanischer Umschalter ist, und dass der Positionierer (60) mit einem Oberflächenelement versehen ist, das fähig ist, mit dem mindestens einen mechanischen Umschalter zusammenzuwirken.

4. Diebstahlsicherung nach einem der vorhergehenden Ansprüche, **dadurch gekennzeichnet, dass** die Rückholfeder (40) des Schlossriegels (30) zwischen dem Schlossriegel (30) und einem stationären Element der Diebstahlsicherung derart montiert ist, dass die Kompression der Feder (40) nicht von einer relativen Position des Schlossriegels (30) und des beweglichen Positionierers (60) abhängt.

5. Diebstahlsicherung nach einem der vorhergehenden Ansprüche, **dadurch gekennzeichnet, dass** die Ausgangswelle des Motors, die Bewegungsrichtung des Schlossriegels und die Bewegungsrichtung des beweglichen Positionierers parallel sind.

6. Diebstahlsicherung nach einem der vorhergehenden Ansprüche, **dadurch gekennzeichnet, dass** der Schlossriegel (30) und der bewegliche Positionierer (60) auf das Profil (23) des Zahnrads (20) von derselben Seite des Profils (23) drücken und sich in dieselbe Richtung zu dem Profil (23) bewegen.

7. Modul zum Unterstützen bei der Drehung einer Lenksäule, das einen Unterstützungsmotor (70) aufweist, der eine Schwenkkraft an die Lenksäule anlegt, **dadurch gekennzeichnet, dass** es eine Diebstahlsicherung nach einem der vorhergehenden Ansprüche aufweist.

8. Baugruppe, die aus einer Lenksäule eines Kraftfahrzeugs und aus einer Diebstahlsicherung nach einem der Ansprüche 1 bis 6 besteht.

9. Kombinierte Baugruppe aus einer Lenksäule eines Kraftfahrzeugs und einem Modul (70, 80) zum Unterstützen der Drehung der Lenksäule nach Anspruch 7, bei der die Lenksäule einen umfänglichen Kranz (50) aufweist, in dem der Schlossriegel in Verriegelungsposition eingreift und der umfängliche Kranz (50) eine Lenksäulen-Schwenkkraft empfängt, die von dem Unterstützungsmotor (70) geliefert wird.

## Claims

1. Motorized steering-column lock for a motor vehicle capable of adopting a locked configuration and an unlocked configuration of the steering column of the vehicle, said steering-column lock comprising:
- an electric motor (10) furnished with an output shaft forming a worm (15),
- a gearwheel (20) engaged on the worm (15),
- at least one profile (23) placed on at least one face of the gearwheel (20),
- a bolt (30) that can move between a locked position and an unlocked position of the steering column, said bolt comprising:
- a main bar (31) of which one end interacts with an element of the steering column in the locked position,
- the bolt interacting with said profile (23) of the gearwheel such that the profile (23) drives the bolt between the locked position and the unlocked position of the column,
- a return spring (40) for returning the bolt (30) to the locked position,
- a movable indexer (60) interacting with at least one sensor in order to detect a position of the profile controlling a locked configuration of the column of the steering lock,
**characterized in that** the movable indexer (60) is translatably mounted in a channel (34) arranged on the bolt (30) and interacts with said profile (23) of the gearwheel (20), said movable indexer (60) being returned in interaction with said profile (23) by a return spring (62), the return spring (62) of the indexer (60) and the return spring (40) of the bolt (30) being distinct.

2. Steering-column lock according to Claim 1, **characterized in that** the indexer (60) comprises a magnet (63) and **in that** said at least one sensor is a Hall effect sensor.

3. Steering-column lock according to Claim 1, **characterized in that** said at least one sensor is a mechanical commutator and **in that** the indexer (60) is furnished with a surface element capable of interacting with said at least one mechanical commutator.

4. Steering-column lock according to one of the preceding claims, **characterized in that** the return spring (40) of the bolt (30) is mounted between the bolt (30) and a fixed element of the steering lock such that the compression of the spring (40) does not depend on a relative position of the bolt (30) and of the movable indexer (60).

5. Steering-column lock according to one of the preceding claims, **characterized in that** the output shaft of the motor, the direction of movement of the bolt and the direction of movement of the movable indexer are parallel.

6. Steering-column lock according to one of the preceding claims, **characterized in that** the bolt (30) and the movable indexer (60) rest on the profile (23) of the gearwheel (20) from the same side of said profile (23) and move in the same direction against the profile (23).

7. Module for assisting the rotation of a steering column, comprising an assistance motor (70) applying a pivoting force to the steering column, **characterized in that** it comprises a steering-column lock according to any one of the preceding claims.

8. Assembly consisting of a steering column of a motor vehicle and a steering lock according to any one of Claims 1 to 6.

9. Combined assembly of a steering column of a motor vehicle and a module (70, 80) for assisting the rotation of the steering column according to Claim 7, wherein the steering column comprises a peripheral ring gear (50) in which the bolt is engaged in the locked position and the peripheral ring gear (50) receives a steering-column pivoting force delivered by the assistance motor (70).
